# EUROPEAN PATENT APPLICATION

(11) **EP 4 697 302 A1**
(43) Date of publication of application: **18.02.2026**
(21) Application number: 24717786.8
(22) Date of filing: 18.03.2024
(51) Int. Cl.: G08G 1/16, B60W 30/14

(54) **CONTROL DEVICE AND CONTROL METHOD**

(30) Priority: 12.04.2023 JP 2023065201
(71) Applicant: Robert Bosch GmbH, 70442 Stuttgart (DE)
(72) Inventor: PFAU, Lars, Tokyo 150-8360 (JP)
(74) Representative: Isarpatent
(86) International application number: PCT/IB2024/052590
(87) International publication number: WO 2024/213952

(57) **Abstract**

An object of the invention is to obtain a control device and a control method capable of appropriately supporting the rider's driving of a lean vehicle.

A control method for a lean vehicle (1) includes: allowing an acquisition section of a control device (20) to acquire travel locus information corresponding to information of a travel locus of the lean vehicle (1) and occupied road width information corresponding to information of a road width occupied by the traveling of the lean vehicle (1); allowing a setting section of the control device (20) to set a reference region on the basis of the travel locus information and the occupied road width information; and allowing an execution section of the control device (20) to execute a rider support operation for supporting the adjustment of a positional relationship between the lean vehicle (1) and a positional relationship adjustment target, wherein the execution section executes a first determination of determining whether a position of at least one object is included in the reference region and sets the positional relationship adjustment target on the basis of the determination result of the first determination, and wherein the acquisition section sets the occupied road width information for setting the reference region used in the first determination on the basis of traveling state information of the lean vehicle (1).

## Description

### Technical Field

The present invention relates to a control device and a control method capable of appropriately supporting the rider's driving of a lean vehicle.

### Background Art

Various technologies have been proposed to support the rider's driving of lean vehicles such as motorcycles. For example, PTL 1 discloses a rider support system that warns a rider of a motorcycle that he or she is inappropriately approaching an obstacle on the basis of information detected by a sensor device detecting an obstacle in a traveling direction or substantially traveling direction.

### Citation List

### Patent Literature

PTL 1: JP2009-116882A

### Summary of Invention

### Technical Problem

Incidentally, as a technology for supporting the driving of a vehicle, a support operation that supports the adjustment of a positional relationship between a positional relationship adjustment target and an own vehicle is known. Then, it is also conceivable to apply the support operation to the lean vehicle. Here, a road width occupied by the traveling of the lean vehicle largely changes depending on the traveling state of the lean vehicle. However, in the conventional support operation, since the conventional support operation is simply applied to the lean vehicle without taking into account changes in the road width occupied by the traveling of the vehicle, it can be difficult to appropriately support the rider's driving of the lean vehicle.

The invention has been made in view of the above-described problems and an object thereof is to obtain a control device and a control method capable of appropriately supporting the rider's driving of a lean vehicle.

### Solution to Problem

According to an aspect of the invention, there is provided a control device for a lean vehicle including: an acquisition section which acquires travel locus information corresponding to information of a travel locus of the lean vehicle and occupied road width information corresponding to information of a road width occupied by the traveling of the lean vehicle; a setting section which sets a reference region on the basis of the travel locus information and the occupied road width information; and an execution section which executes a rider support operation for supporting the adjustment of a positional relationship between the lean vehicle and a positional relationship adjustment target, wherein the execution section executes a first determination of determining whether a position of at least one object is included in the reference region and sets the positional relationship adjustment target on the basis of the determination result of the first determination, and wherein the acquisition section sets the occupied road width information for setting the reference region used in the first determination on the basis of traveling state information of the lean vehicle.

According to another aspect of the invention, there is provided a control method for a lean vehicle including: allowing an acquisition section of a control device to acquire travel locus information corresponding to information of a travel locus of the lean vehicle and occupied road width information corresponding to information of a road width occupied by the traveling of the lean vehicle; allowing a setting section of the control device to set a reference region on the basis of the travel locus information and the occupied road width information; and allowing an execution section of the control device to execute a rider support operation for supporting the adjustment of a positional relationship between the lean vehicle and a positional relationship adjustment target, wherein the execution section executes a first determination of determining whether a position of at least one object is included in the reference region and sets the positional relationship adjustment target on the basis of the determination result of the first determination, and wherein the acquisition section sets the occupied road width information for setting the reference region used in the first determination on the basis of traveling state information of the lean vehicle.

### Advantageous Effects of Invention

In the control device and the control method according to the invention, the acquisition section of the control device acquires the travel locus information corresponding to information of the travel locus of the lean vehicle and the occupied road width information corresponding to information of the road width occupied by the traveling of the lean vehicle, the setting section of the control device sets the reference region on the basis of the travel locus information and the occupied road width information, the execution section of the control device executes the rider support operation for supporting the adjustment of the positional relationship between the lean vehicle and the positional relationship adjustment target, the execution section executes the first determination of determining whether the position of at least one object is included in the reference region and sets the positional relationship adjustment target on the basis of the determination result of the first determination, and the acquisition section sets the occupied road width information for setting the reference region used in the first determination on the basis of the traveling state information of the lean vehicle.

Accordingly, it is possible to set the positional relationship adjustment target by taking into account changes in the road width occupied by the lean vehicle depending on the traveling state. Therefore, it is possible to appropriately support the rider's driving of the lean vehicle.

### Brief Description of Drawings

Fig. 1 is a schematic view showing a schematic configuration of a lean vehicle according to an embodiment of the invention.
Fig. 2 is a schematic view showing a state in which the lean vehicle according to the embodiment of the invention is tilted in a roll direction.
Fig. 3 is a block diagram showing an example of a functional configuration of a control device according to the embodiment of the invention.
Fig. 4 is a diagram showing a first example of a positional relationship between the lean vehicle according to the embodiment of the invention and an object around the lean vehicle.
Fig. 5 is a diagram showing a second example of the positional relationship between the lean vehicle according to the embodiment of the invention and the object around the lean vehicle.
Fig. 6 is a flowchart showing a first example of a flow of a process executed by a control device according to the embodiment of the invention.
Fig. 7 is a diagram showing a third example of the positional relationship between the lean vehicle according to the embodiment of the invention and the object around the lean vehicle.
Fig. 8 is a diagram showing a fourth example of the positional relationship between the lean vehicle according to the embodiment of the invention and the object around the lean vehicle.
Fig. 9 is a flowchart showing a second example of the flow of the process executed by the control device according to the embodiment of the invention.

### Description of Embodiments

Hereinafter, a control device and a control method according to the invention will be described with reference to the drawings.

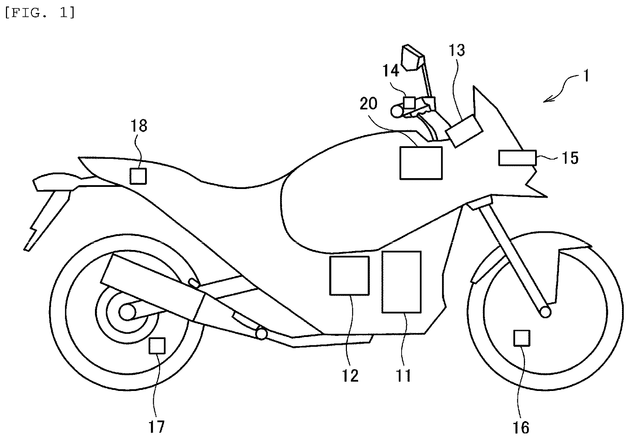

Furthermore, although a control device used for a two-wheeled motorcycle is described below (see a lean vehicle 1 in Fig. 1), the vehicle to be controlled by the control device according to the invention may be any lean vehicle, and may be a lean vehicle other than the two-wheeled motorcycle. The lean vehicle refers to a vehicle whose vehicle body falls to the right when turning to the right and whose vehicle body falls to the left when turning to the left. Examples of the lean vehicle include motorcycles (two-wheeled vehicles, three-wheeled vehicles), bicycles, and the like. Motorcycles include vehicles powered by engines, vehicles powered by electric motors, and the like. Examples of motorcycles include motorbikes, scooters, electric scooters, and the like. Bicycle means a vehicle that can be propelled on the road by the rider's pedal effort. Bicycles include regular bicycles, electrically assisted bicycles, electric bicycles, and the like.

Further, although a case will be described below in which an engine (specifically, an engine 11 in Fig. 1 which will be described later) is installed as a drive source capable of outputting power for driving drive wheels, a drive source other than the engine (for example, an electric motor) may be installed as the drive source or a plurality of drive sources may be installed.

Further, although a case will be described below in which a control unit that controls the hydraulic pressure of brake fluid (specifically, a hydraulic pressure control unit 12 in Fig. 1 which will be described later) is employed as a control unit for the braking force generated in the wheels, a control unit (so-called brake-by-wire) that controls the position of the brake part itself of the wheel using an electrical signal may be employed as a control unit for the braking force generated in the wheels.

Further, the configuration and operation described below are merely examples, and the control device and control method according to the invention are not limited to such configuration and operation.

In addition, the same or similar descriptions are simplified or omitted as appropriate below. Further, in each figure, for the same or similar members or parts, reference signs are omitted or the same reference signs are used. Further, detailed structures are simplified or omitted as appropriate.

### <Configuration of lean vehicle>

A configuration of the lean vehicle 1 according to the embodiment of the invention will be described with reference to Figs. 1 to 5.

Fig. 1 is a schematic view showing a schematic configuration of the lean vehicle 1. The lean vehicle 1 is a two-wheeled motorcycle corresponding to an example of a lean vehicle according to the invention. The lean vehicle 1 includes, as shown in Fig. 1, the engine 11, the hydraulic pressure control unit 12, a display device 13, an input device 14, a surrounding environment sensor 15, a front wheel speed sensor 16, a rear wheel speed sensor 17, an inertial measurement unit (IMU) 18, and a control device (ECU) 20.

The engine 11 corresponds to an example of a drive source of the lean vehicle 1, and can output power for driving drive wheels (specifically, rear wheels). For example, the engine 11 is provided with one or more cylinders each having a combustion chamber formed therein, a fuel injection valve that injects fuel toward the combustion chamber, and a spark plug. When fuel is injected from the fuel injection valve, a mixture containing air and fuel is formed in the combustion chamber, and the mixture is ignited by the spark plug and combusts. Accordingly, the piston inside the cylinder moves back and forth to cause the crankshaft to rotate. Further, a throttle valve is provided in the intake pipe of the engine 11, and the amount of air taken into the combustion chamber changes depending on the throttle opening which is the opening of the throttle valve.

The hydraulic pressure control unit 12 is a unit that has a function of controlling the braking force generated on the wheels. For example, the hydraulic pressure control unit 12 is provided on an oil line connecting the master cylinder and the wheel cylinder, and includes components (for example, a control valve and a pump) for controlling the brake hydraulic pressure of the wheel cylinder. By controlling the operation of the components of the hydraulic pressure control unit 12, the braking force generated on the wheels is controlled. Furthermore, the hydraulic pressure control unit 12 may control the braking force generated on both the front wheels and the rear wheels, or may control only the braking force generated on one of the front wheels and the rear wheels.

The display device 13 has a display function that visually displays information. Examples of the display device 13 include a liquid crystal display and the like. The display device 13 is, for example, provided in front of the handle in the lean vehicle 1. However, the arrangement of the display device 13 with respect to the vehicle body is not particularly limited.

The input device 14 accepts various operations by the rider. The input device 14 includes, for example, a push button provided on the handle and used for rider's operation. Information related to the rider's operation using the input device 14 is output to the control device 20.

The surrounding environment sensor 15 detects surrounding environment information related to the environment around the lean vehicle 1. The surrounding environment information detected by the surrounding environment sensor 15 is output to the control device 20. The surrounding environment sensor 15 is mounted on, for example, the lean vehicle 1. The surrounding environment sensor 15 detects environment information in front of the lean vehicle 1, behind the lean vehicle 1, or on the side of the lean vehicle 1 as surrounding environment information. Alternatively, the surrounding environment sensor 15 may detect at least two of the environment information in front of the lean vehicle 1, the environment information behind the lean vehicle 1, and the environment information on the side of the lean vehicle 1 as the surrounding environment information. The lean vehicle is not limited to one equipped with one surrounding environment sensor 15, but may be equipped with a plurality of surrounding environment sensors. For example, the surrounding environment sensor 15 may be a front surrounding environment sensor provided at a front portion of the body of the lean vehicle 1, a rear surrounding environment sensor provided at a rear portion of the body of the lean vehicle 1, and a side surrounding environment sensor provided on the side of the body of the lean vehicle 1. The surrounding environment sensor 15 may detect the surrounding environment information in a non-contact state.

The surrounding environment information detected by the surrounding environment sensor 15 may be information related to the distance or direction to a subject located around the lean vehicle 1 (for example, relative position, relative distance, relative speed, relative acceleration, and the like) or characteristics of a subject located around the lean vehicle 1 (for example, the type of subject, the shape of the subject itself, a mark attached to the subject, and the like). The surrounding environment sensor 15 is, for example, a radar, a Lidar sensor, an ultrasonic sensor, a camera, or the like.

Furthermore, the surrounding environment information may also be detected by the surrounding environment sensors mounted on other vehicles or infrastructure equipment. That is, the control device 20 can also acquire surrounding environment information via wireless communication with other vehicles or infrastructure equipment.

The front wheel speed sensor 16 is a wheel speed sensor that detects the wheel speed of the front wheels (for example, the number of revolutions per unit time [rpm] of the front wheels or the moving distance per unit time [km/h], etc.) and outputs the detection result. The front wheel speed sensor 16 may detect other physical quantities that can be substantially converted into the wheel speed of the front wheels. The front wheel speed sensor 16 is provided on the front wheel.

The rear wheel speed sensor 17 is a wheel speed sensor that detects the wheel speed of the rear wheels (for example, the number of revolutions per unit time [rpm] of the rear wheels or the moving distance per unit time [km/h], etc.) and outputs the detection result. The rear wheel speed sensor 17 may detect other physical quantities that can be substantially converted into the wheel speed of the rear wheels. The rear wheel speed sensor 17 is provided on the rear wheel.

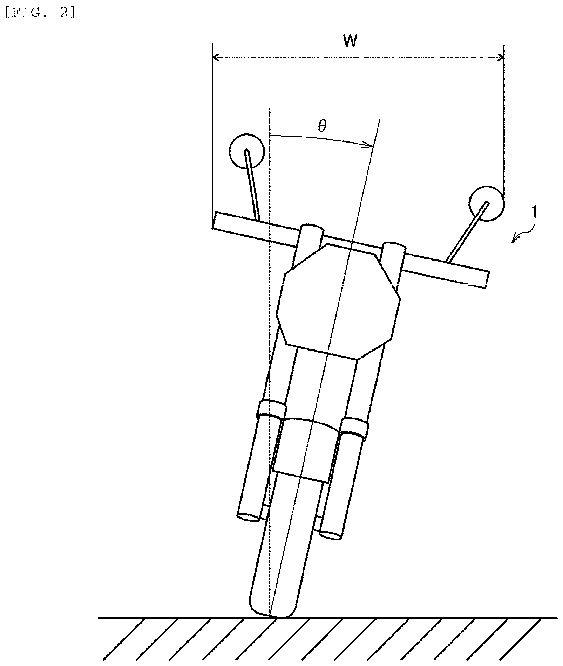

The inertial measurement unit 18 includes a three-axis gyro sensor and a three-direction acceleration sensor, and detects the attitude of the lean vehicle 1. For example, the inertial measurement unit 18 is provided in the body of the lean vehicle 1. For example, the inertial measurement unit 18 detects the lean angle of the lean vehicle 1 and outputs the detection result. The inertial measurement unit 18 may detect other physical quantities that can be substantially converted into the lean angle of the lean vehicle 1. Fig. 2 is a schematic view showing a state in which the lean vehicle 1 is tilted in the roll direction. As shown in Fig. 2, the lean angle θ corresponds to an angle representing the inclination of the vehicle body (specifically, the body) of the lean vehicle 1 in the roll direction with respect to the vertically upward direction. The inertial measurement unit 18 may include only a part of a three-axis gyro sensor and a part of three-direction acceleration sensors, and may be capable of detecting the lean angle θ.

As shown in Fig. 2, the road width W occupied by the lean vehicle 1 when traveling largely varies depending on the traveling state of the lean vehicle 1. Specifically, the road width W increases as the lean angle θ increases. The road width W may be a width occupied by the lean vehicle 1 itself, may be a width that takes into account the region occupied by the rider of the lean vehicle 1, or may be a width that takes into account the region that a loaded object of the lean vehicle 1 occupies. Furthermore, the occupied road width information corresponding to information of the road width W will be described in detail later.

The control device 20 of Fig. 1 controls the lean vehicle 1. For example, a part or entirety of the control device 20 is composed of a microcomputer, a microprocessor unit, and the like. Further, for example, a part or entirety of the control device 20 may be configured with something updatable such as firmware or may be a program module or the like executed by a command from a CPU or the like. For example, the control device 20 may be a single unit or a plurality of divided units.

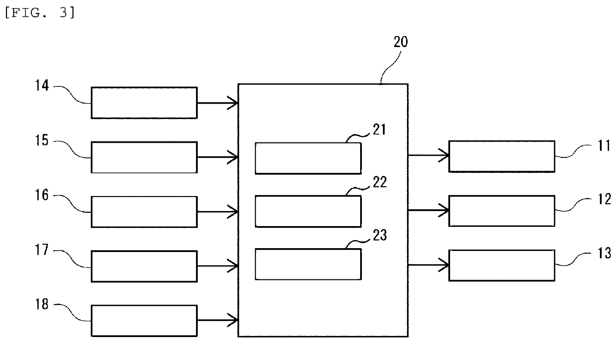

The control device 20 includes, as shown in Fig. 3, for example, an acquisition section 21, a setting section 22, and an execution section 23.

The control device 20 communicates with each of devices of the lean vehicle 1 (for example, the engine 11, the hydraulic pressure control unit 12, the display device 13, the input device 14, the surrounding environment sensor 15, the front wheel speed sensor 16, the rear wheel speed sensor 17, and the inertial measurement unit 18). Specifically, the control device 20 acquires information from the input device 14, the surrounding environment sensor 15, the front wheel speed sensor 16, the rear wheel speed sensor 17, and the inertial measurement unit 18. Furthermore, in this specification, acquiring information may include extracting or generating information (for example, calculation) and the like. Further, the control device 20 can control the operations of the engine 11, the hydraulic pressure control unit 12, and the display device 13.

The acquisition section 21 acquires various information items. For example, the acquisition section 21 acquires various information items on the basis of the input from the display device 13, the input device 14, the surrounding environment sensor 15, the front wheel speed sensor 16, the rear wheel speed sensor 17, the inertial measurement unit 18, and the like.

The setting section 22 sets various parameters used for the process executed by the execution section 23 on the basis of various information items acquired by the acquisition section 21.

The execution section 23 executes various controls by controlling the operation of each device of the lean vehicle 1. The execution section 23 controls, for example, the operations of the engine 11, the hydraulic pressure control unit 12, and the display device 13.

In particular, the execution section 23 can execute a rider support operation that supports adjustment of the positional relationship between the positional relationship adjustment target and the lean vehicle 1. The positional relationship adjustment target is a target for adjusting the positional relationship in the rider support operation described above. Specifically, the execution section 23 executes the rider support operation on the basis of the positional relationship information between the positional relationship adjustment target and the lean vehicle 1. The positional relationship information may include, for example, information such as the relative position, relative distance, relative speed, relative acceleration, relative jerk, and passing time difference of the lean vehicle 1 with respect to the positional relationship adjustment target. The positional relationship information may be information on other physical quantities that can be substantially converted into this information. The positional relationship information can be acquired on the basis of the surrounding environment information of the lean vehicle 1 acquired from the surrounding environment sensor 15 and the like.

For example, the rider support operation includes a positional relationship adjustment operation that brings the positional relationship between the positional relationship adjustment target and the lean vehicle 1 closer to the target positional relationship by controlling the speed of the lean vehicle 1. As the positional relationship adjustment operation, for example, adaptive cruise control can be exemplified. However, the positional relationship adjustment operation may be operations other than the adaptive cruise control. The operations other than adaptive cruise control are, for example, operations which are not canceled even if the rider executes an accelerator operation and in which the target positional relationship changes depending on the amount of the accelerator operation.

In the adaptive cruise control, for example, a target inter-vehicle distance which is a target value of the inter-vehicle distance between the lean vehicle 1 and the front vehicle is set and the execution section 23 controls the speed of the lean vehicle 1 so that the inter-vehicle distance between the lean vehicle 1 and the front vehicle is maintained at the target inter-vehicle distance. Furthermore, the inter-vehicle distance may mean the distance in the direction along the lane (specifically, the travel lane of the lean vehicle 1), or may mean the straight line distance. The inter-vehicle distance between the lean vehicle 1 and the front vehicle can be acquired, for example, on the basis of the surrounding environment information of the lean vehicle 1.

Furthermore, in the adaptive cruise control, a target passing time difference which is a target value of the passing time difference is set and the execution section 23 may control the speed of the lean vehicle 1 so that the passing time difference is maintained at the target passing time difference. Specifically, the passing time difference is the time taken for the lean vehicle 1 to pass through the current position of the front vehicle from the current time point. The passing time difference can be acquired, for example, on the basis of the surrounding environment information of the lean vehicle 1.

For example, the execution section 23 starts the adaptive cruise control by the rider's operation using the input device 14 as a trigger. In the adaptive cruise control, the execution section 23 automatically controls the speed of the lean vehicle 1 without depending on the rider's acceleration/deceleration operations (that is, accelerator operation and brake operation). The execution section 23 can control the speed of the lean vehicle 1, for example, on the basis of information on the speed of the lean vehicle 1 acquired on the basis of the wheel speed of the front wheels and the wheel speed of the rear wheels.

Further, for example, the rider support operation includes a braking operation that automatically controls the braking force acting on the lean vehicle 1 according to the possibility of collision of the lean vehicle 1 with respect to the positional relationship adjustment target. For example, as the braking operation, an operation that automatically amplifies the braking force generated in the lean vehicle 1 according to the possibility of collision of the lean vehicle 1 with respect to the front vehicle in a situation in which the rider of the lean vehicle 1 operates the brake is exemplified. Further, for example, as the braking operation, an operation that automatically generates a braking force in the lean vehicle 1 according to the possibility of collision of the lean vehicle 1 with respect to the front vehicle in a situation in which the rider of the lean vehicle 1 does not operate the brake is exemplified.

Further, for example, the rider support operation includes a notification operation that supports the adjustment of the positional relationship between the positional relationship adjustment target and the lean vehicle 1 by notifying the rider of the lean vehicle 1. Examples of the notification operation include forward collision warning (FCW).

The forward collision warning is an operation that warns of the presence or approach of an obstacle such as a vehicle located in front of the lean vehicle 1. For example, the execution section 23 determines whether the possibility of collision exceeds a reference on the basis of the inter-vehicle distance between the lean vehicle 1 and the front vehicle and the relative speed of the lean vehicle 1 with respect to the front vehicle. Then, when it is determined that the possibility of collision exceeds the reference, for example, the execution section 23 issues a warning to the rider using the display device 13. However, a notification operation such as a forward collision warning may be executed using a notification device other than the display device 13 (for example, a sound output device or a vibration generator) . Further, the notification device may be mounted on the lean vehicle 1 or may be mounted on something worn by the rider (for example, a helmet or the like). Further, the notification operation such as forward collision warning may be executed by a haptic operation that causes the lean vehicle 1 to instantaneously decrease or increase acceleration. In that case, for example, the engine 11 or the hydraulic pressure control unit 12 takes on the function of the notification device.

The possibility of collision in the forward collision warning corresponds to the possibility that lean vehicle 1 will collide with the front vehicle even if the front vehicle does not brake suddenly. However, as a notification operation, an operation may be executed to notify the rider of the lean vehicle 1 when it is determined that the lean vehicle 1 may collide with the front vehicle (that is, the potential possibility of collision) if the front vehicle brakes suddenly when the lean vehicle 1 travels following the front vehicle. In such a notification operation, for example, the execution section 23 notifies the rider of the lean vehicle 1 when the inter-vehicle distance between the lean vehicle 1 and the front vehicle becomes shorter than the reference distance and the absolute value of the relative speed between the lean vehicle 1 and the front vehicle becomes smaller than the reference speed.

Furthermore, as described below, the rider support operation is not limited to the above-described examples. Further, a rider support operation in which an object located in front of the lean vehicle 1 is set as a positional relationship adjustment target will be mainly described below. However, the execution section 23 may execute a rider support operation in which an object located behind the lean vehicle 1 is set as a positional relationship adjustment target. In that case, for example, a rear surrounding environment sensor is provided in the lean vehicle 1 as the surrounding environment sensor 15 that detects the rear surrounding environment information of the lean vehicle 1 and the rider support operation is executed on the basis of the surrounding environment information detected by the rear surrounding environment sensor.

Here, the execution section 23 executes a first determination and a second determination as a determination for appropriately setting the positional relationship adjustment target. These determinations are made by taking into account changes in the road width W occupied by the traveling of the lean vehicle 1 depending on the traveling state of the lean vehicle 1. Accordingly, as will be described later, it is possible to appropriately set the positional relationship adjustment target and appropriately support the rider's driving of the lean vehicle 1. Furthermore, as will be described later, when setting the positional relationship adjustment target, at least the first determination may be executed and the second determination does not necessarily need to be executed.

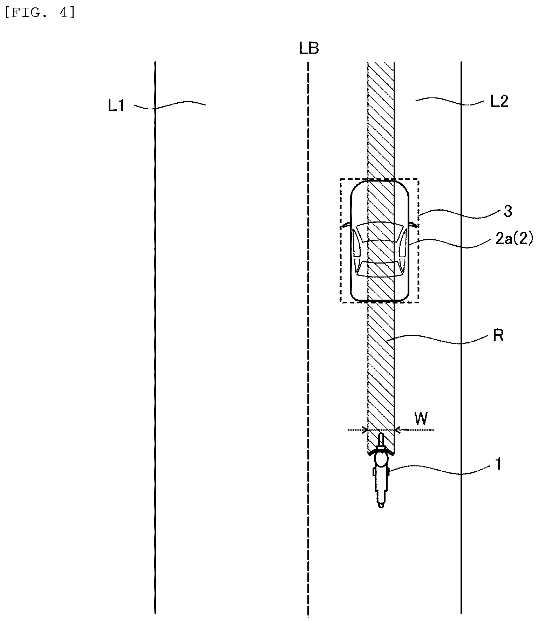

Fig. 4 is a diagram showing a first example of a positional relationship between the lean vehicle 1 and an object 2 around the lean vehicle 1. In the examples of Fig. 4 and Figs. 5, 7, and 8 described below, a lane L1 and a lane L2 are adjacent to each other with a lane boundary LB interposed therebetween. In the example of Fig. 4, the lean vehicle 1 travels in the lane L2. The object 2 corresponds to a positional relationship adjustment target candidate. In the examples of Fig. 4 and Figs. 5, 7, and 8 described below, the object 2 is a vehicle. Furthermore, the object 2 may include various types of vehicles such as four-wheeled cars, trucks, and motorcycles. Further, the object 2 is not limited to a vehicle, and may be, for example, a pedestrian. In the example of Fig. 4, an object 2a is located in front of the lean vehicle 1 in the lane L2.

In the first determination, the execution section 23 determines whether a reference region R includes at least one position of the object 2. The reference region R means a region through which the road width W occupied by the traveling of the lean vehicle 1 passes. In other words, the reference region R means a region through which the lean vehicle 1 occupying the road width W passes when traveling.

The case where the position of the object 2 is included in the reference region R means the case where at least a part of the object 2 is located within the reference region R. The position of the object 2 may be the current position of the object 2 or may be the future position of the object 2. Alternatively, the position of the object 2 may be the position where the object 2 was located in the past. From the viewpoint of accurately executing the rider support operation, it is preferable that the position of the object 2 is the current position and/or the future position. Specifically, from the viewpoint of accurately executing the rider support operation, in the first determination, it is preferable that the execution section 23 determines that the position of the object 2 is included in the reference region R when at least a part of the object 2 is currently located within the reference region R and/or is predicted to be located within the reference region R in the future.

The acquisition section 21 acquires travel locus information corresponding to information on the travel locus of the lean vehicle 1 and occupied road width information corresponding to information on the road width W occupied by the traveling of the lean vehicle 1.

For example, the travel locus information is information indicating a future locus that is a predicted locus that the lean vehicle 1 will pass in the future. Further, for example, the travel locus information may include information indicating a measured locus that is a measured locus including a past locus and/or current position of the lean vehicle 1 that actually traveled. The acquisition section 21 acquires the travel locus information, for example, on the basis of information related to the behavior of the lean vehicle 1. The information related to the behavior of the lean vehicle 1 is, for example, information such as speed, acceleration, lateral acceleration, jerk, lateral jerk, yaw rate, lean angle θ, and steering angle. Furthermore, the information related to the behavior of the lean vehicle 1 may include not only information related to the current behavior of the lean vehicle 1 but also information related to predicted future behavior of the lean vehicle 1.

The acquisition section 21 acquires the occupied road width information on the basis of the traveling state information of the lean vehicle 1. Specifically, the traveling state information is information on the traveling state that affects the attitude of the lean vehicle 1. For example, the acquisition section 21 acquires the occupied road width information on the basis of the lean angle θ of the lean vehicle 1. Furthermore, the occupied road width information may be information indicating the value of the road width W strictly calculated on the basis of geometry and the like or may be information indicating the approximate value of the road width W. For example, the occupied road width information may be information indicating which width among widths classified into several stages is. Furthermore, information other than the lean angle θ may be used as information on the traveling state that affects the attitude of the lean vehicle 1. Information other than the lean angle θ is, for example, information on the yaw rate of the lean vehicle 1, information on the steering angle, and the like. Furthermore, the acquisition section 21 may acquire a width obtained by adding margins on the left and right sides to the width estimated to be occupied by the traveling of the lean vehicle 1 as the road width W. Furthermore, the margins may change depending on information related to the behavior of the lean vehicle 1 (for example, the speed of the lean vehicle 1 or the like).

From the viewpoint of accurately acquiring the occupied road width information, it is preferable that the acquisition section 21 acquires the occupied road width information on the basis of the dimensional information of the side projecting part of the lean vehicle 1. Examples of side projecting parts include mirrors, pedals, steps, mufflers, and the like. Further, from a similar viewpoint, it is preferable that the acquisition section 21 acquires the occupied road width information on the basis of the passenger information of the lean vehicle 1. Examples of the passenger information include dimensional information of the rider of the lean vehicle 1, dimensional information of a fellow passenger, dimensional information of what the rider is wearing, dimensional information of what the fellow passenger is wearing, and the like. Further, from a similar point of view, it is preferable that the acquisition section 21 acquires the occupied road width information on the basis of the load information of the lean vehicle 1. Examples of the load information include side case dimensional information, baggage dimensional information, and the like. Furthermore, the acquisition section 21 may acquire the occupied road width information by using any two or more types of information among the dimensional information of the side projecting part of the lean vehicle 1, the passenger information of the lean vehicle 1, and the load information of the lean vehicle 1.

The execution section 23 executes the first determination that determines whether the position of the object 2 is included in the reference region R on the basis of the object position information corresponding to information related to the position of the object 2.

In the example of Fig. 4, the current position of the object 2a is included in the reference region R. Therefore, the execution section 23 determines that the current position of the object 2a is included in the reference region R in the first determination. The information indicating the current position of the object 2 can be acquired, for example, on the basis of the surrounding environment information of the lean vehicle 1. Further, the execution section 23 may determine whether the future position of the object 2a is included in the reference region R in the first determination. The information indicating the future position of the object 2 can be acquired, for example, on the basis of information related to the behavior of the object 2 (for example, information on speed, acceleration, lateral acceleration, jerk, lateral jerk, and the like) obtained on the basis of the surrounding environment information of the lean vehicle 1. Furthermore, the information related to the behavior of the object 2 may include not only information related to the current behavior of the object 2 but also information related to the predicted future behavior of the object 2. Further, the execution section 23 may determine whether the past position of the object 2a is included in the reference region R in the first determination.

Specifically, a state in which the current position of the object 2a is included in the reference region R means that a part of a region 3 that the object 2 currently occupies is included in the reference region R. That is, the execution section 23 determines that the current position of the object 2a is included in the reference region R when a part of the region 3 currently occupied by the object 2 is included in the reference region R in the first determination. Further, as described above, the execution section 23 may determine whether the future position of the object 2a is included in the reference region R in the first determination. Specifically, a state in which the future position of the object 2a is included in the reference region R means that a part of the region 3 occupied by the object 2 in the future is included in the reference region R.

Therefore, specifically, the execution section 23 executes the first determination by taking into account the dimensional information (for example, the width information) of the region 3 occupied by the object 2. For example, the dimensional information (for example, the width information) of the region 3 occupied by the object 2 can be acquired by the acquisition section 21 on the basis of the surrounding environment information of the lean vehicle 1. Furthermore, the acquisition section 21 may acquire the width information obtained by adding the left and right margins to the width predicted to be occupied by the object 2 as the dimensional information. Furthermore, the margin may change depending on information related to the behavior of the object 2 (for example, the speed of the object 2 or the like). However, the dimensional information of the region 3 occupied by the object 2 may be set in advance. Further, the dimensional information of the region 3 occupied by the object 2 may be set depending on the type of vehicle of the object 2, may be set depending on whether the object 2 is a vehicle or a pedestrian, and may be set depending on the movement direction of the object 2.

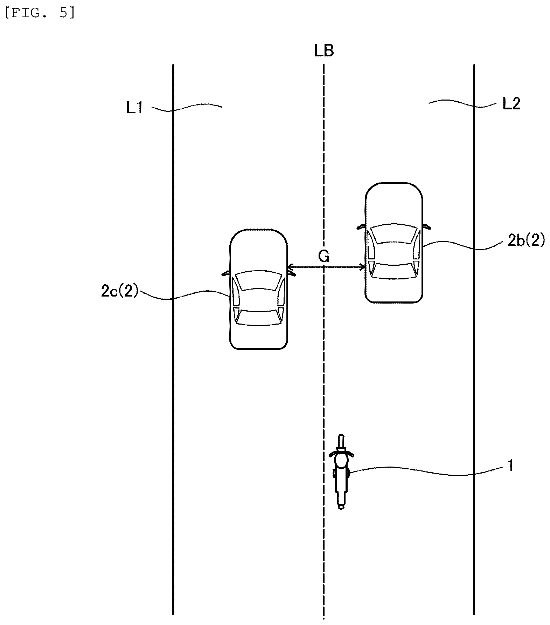

Fig. 5 is a diagram showing a second example of the positional relationship between the lean vehicle 1 and the object 2 around the lean vehicle 1. In the example of Fig. 5, the lean vehicle 1 travels at a position close to the lane boundary LB in the lane L2. In the example of Fig. 5, an object 2b is located in front of the lean vehicle 1 in the lane L2 and an object 2c travels in the lane L1.

As will be described later, the second determination is executed when it is not determined that the position of the object 2 is included in the reference region R in the first determination. In the second determination, the execution section 23 determines whether the lean vehicle 1 is allowed to travel through a gap G between the objects 2. For example, in the example of Fig. 5, the execution section 23 determines whether the lean vehicle 1 is allowed to travel through the gap G between the objects 2b and 2c in the second determination.

For example, the execution section 23 can determine whether the lean vehicle 1 can travel through the gap G by determining whether the lean vehicle 1 is allowed to travel through the gap G. For example, when the road width W occupied by the traveling of the lean vehicle 1 is wider than the gap G, the execution section 23 determines that the lean vehicle 1 cannot travel through the gap G and determines that the lean vehicle 1 is not allowed to travel through the gap G. On the other hand, when the road width W occupied by the traveling of the lean vehicle 1 is narrower than the gap G, the execution section 23 determines that the lean vehicle 1 can travel through the gap G and determines that the lean vehicle 1 is allowed to travel through the gap G.

However, the execution section 23 may determine whether the lean vehicle 1 is allowed to travel through the gap G in consideration of the safety of the traveling of the lean vehicle 1 through the gap G. For example, when a difference between the road width W and the gap G is smaller than a predetermined value even when the road width W occupied by the traveling of the lean vehicle 1 is narrower than the gap G, the execution section 23 may determine that the safety of traveling through the gap G is low and the lean vehicle 1 is not allowed to travel through the gap G. The predetermined value is set to a value capable of ensuring a difference between the road width W and the gap G to a degree that the contact of at least two objects 2 (for example, the object 2b and the object 2c) forming the gap G with the lean vehicle 1 can be prevented.

The execution section 23 executes the second determination on the basis of the occupied road width information and the gap information which is the information of the gap G between the objects 2. The gap information is acquired by the acquisition section 21. The acquisition section 21 acquires the gap information on the basis of the surrounding environment information of the lean vehicle 1. Specifically, the acquisition section 21 acquires information on the positional relationship between the objects 2 as the surrounding environment information. The gap G is, for example, a separation distance between the objects 2 in the lane width direction. Further, according to the viewpoint of accurately executing the rider support operation, it is preferable that the acquisition section 21 acquires not only the occupied road width information for setting the reference region R used in the first determination but also the occupied road width information used in the second determination on the basis of the traveling state information. However, the occupied road width information used in the second determination may not be acquired on the basis of the traveling state information.

A process of setting the positional relationship adjustment target using the first determination and the second determination will be described in detail later.

### <Operation of control device>

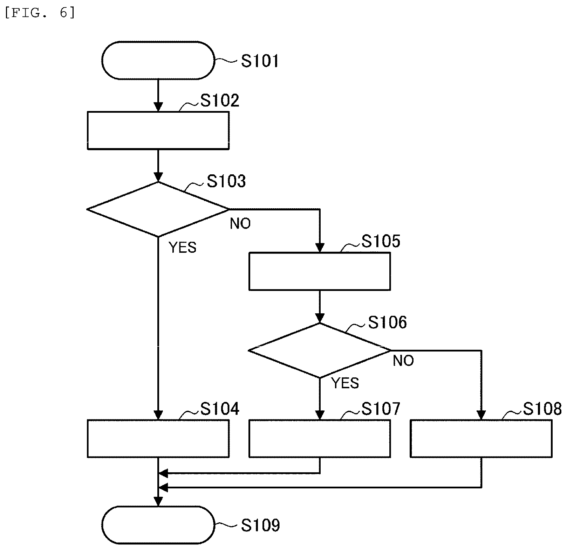

An operation of the control device 20 according to the embodiment of the invention will be described with reference to Figs. 6 to 9.

Fig. 6 is a flowchart showing a first example of a flow of a process executed by the control device 20. Step S101 of Fig. 6 corresponds to the start of the control flow shown in Fig. 6. Step S109 of Fig. 6 corresponds to the end of the control flow shown in Fig. 6. For example, the control flow shown in Fig. 6 is repeatedly executed at preset time intervals.

When the control flow shown in Fig. 6 starts, in step S102, the execution section 23 executes the first determination for all detected objects 2.

As described above, the object 2 corresponds to the positional relationship adjustment target candidate. For example, the execution section 23 can detect the object 2 on the basis of the surrounding environment information acquired from the surrounding environment sensor 15. In this case, the object 2 located in the detection range of the surrounding environment sensor 15 is detected. However, for example, the execution section 23 may detect the object 2 on the basis of the surrounding environment information acquired through wireless communication with other vehicles or infrastructure equipment.

After step S102, in step S103, the execution section 23 determines whether at least one object 2 whose position is included in the reference region R exists in the first determination.

When it is determined that at least one object 2 whose position is included in the reference region R exists in the first determination (step S103/YES), the process proceeds to step S104. On the other hand, when it is determined that the object 2 whose position is included in the reference region R does not exist in the first determination (step S103/NO), the process proceeds to step S105.

When it is determined that at least one object 2 whose position is included in the reference region R exists in the first determination (step S103/YES), in step S104, the execution section 23 sets the positional relationship adjustment target on the basis of the determination result of the first determination and the control flow shown in Fig. 6 ends.

For example, when it is determined that only one object 2 whose position is included in the reference region R exists in the first determination, in step S104, the execution section 23 sets the object 2 as the positional relationship adjustment target. For example, in the example of Fig. 4, the execution section 23 sets the object 2a as the positional relationship adjustment target.

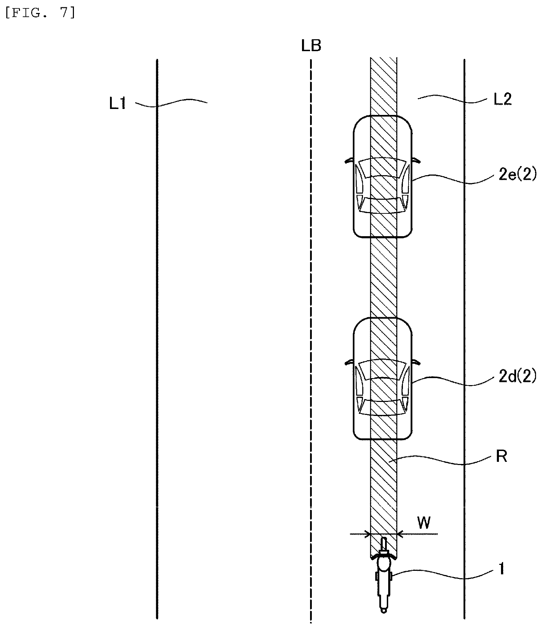

Here, there is a case in which the positions of the plurality of objects 2 are included in the reference region R. Fig. 7 is a diagram showing a third example of the positional relationship between the lean vehicle 1 and the object 2 around the lean vehicle 1. In the example of Fig. 7, the lean vehicle 1 travels in the lane L2. Further, an object 2d is located in front of the lean vehicle 1 in the lane L2 and an object 2e is located further in front of the object 2d in the lane L2. Then, the current positions of the object 2d and the object 2e are included in the reference region R. Therefore, the execution section 23 determines that the position of the object 2d is included in the reference region R and the position of the object 2e is included in the reference region R in the first determination.

When it is determined that the positions of the plurality of objects 2 are included in the reference region R in the first determination, in step S104 of Fig. 6, the execution section 23 sets one of the plurality of objects 2 as the positional relationship adjustment target on the basis of the positional relationship between the lean vehicle 1 and each of the plurality of objects 2. For example, the information of the positional relationship between the lean vehicle 1 and each of the plurality of objects 2 can be acquired on the basis of the surrounding environment information of the lean vehicle 1.

For example, the execution section 23 sets the object 2 located closest to the lean vehicle 1 among the plurality of objects 2 as the positional relationship adjustment target. For example, in the example of Fig. 7, the execution section 23 sets the object 2d as the positional relationship adjustment target. Here, the object 2 located closest to the lean vehicle 1 may be the object 2 having the shortest straight line distance to the lean vehicle 1 or the object 2 located closest to the lean vehicle 1 in the front to rear direction.

Furthermore, the execution section 23 may set a virtual target located at a position in which the relative position of each object 2 with respect to the lean vehicle 1 is standardized (for example, averaged) as the positional relationship adjustment target on the basis of the positional relationship between the lean vehicle 1 and each of the plurality of objects 2. For example, in the example of Fig. 7, the virtual target is a virtual object located between the object 2d and the object 2e.

When it is determined that the object 2 whose position is included in the reference region R does not exist in the first determination (step S103/NO), in step S105, the execution section 23 executes the second determination of determining whether the lean vehicle 1 is allowed to travel through the gap G. Specifically, the execution section 23 executes the second determination for all gaps G formed by all detected objects 2.

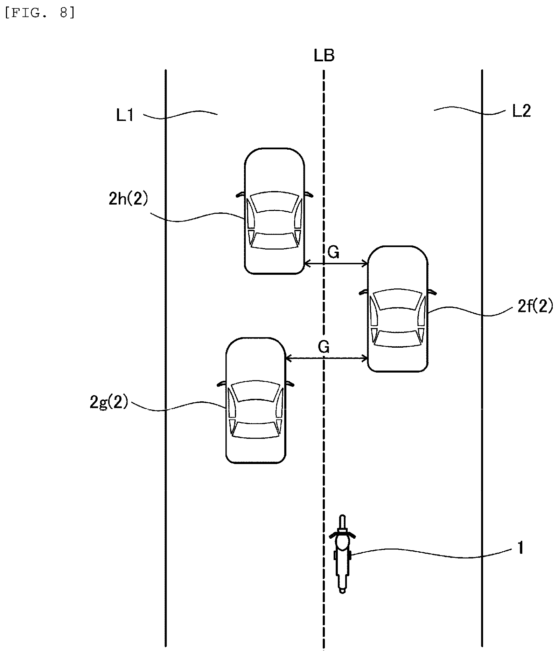

Fig. 8 is a diagram showing a fourth example of the positional relationship between the lean vehicle 1 and the object 2 around the lean vehicle 1. In the example of Fig. 8, the lean vehicle 1 travels in the lane L2. Further, an object 2f is located in front of the lean vehicle 1 in the lane L2. Further, an object 2g and an object 2h travel in the lane L1. The object 2h is located in front of the object 2g in the lane L1. In the front to rear direction, the object 2h, the object 2f, and the object 2g are lined up in this order from the front.

For example, in the example of Fig. 8, in step S105, the execution section 23 determines whether the lean vehicle 1 is allowed to travel through the gap G between the object 2f and the object 2g and further determines whether the lean vehicle 1 is allowed to travel through the gap G between the object 2f and the object 2h.

After step S105 of Fig. 6, in step S106, the execution section 23 determines whether at least one gap G not allowing the traveling therethrough exists in the second determination. For example, the execution section 23 determines that at least one gap G not allowing the traveling therethrough exists when the gap information is information indicating that at least one gap G not allowing the traveling therethrough exists in the second determination.

In the second determination, when it is determined that at least one gap G not allowing the traveling therethrough exists (step S106/YES), the process proceeds to step S107. On the other hand, when it is determined that the gap G not allowing the traveling therethrough does not exist in the second determination (step S106/NO), the process proceeds to step S108.

In the second determination, when it is determined that at least one gap G not allowing the traveling therethrough exists (step S106/YES), in step S107, the execution section 23 sets at least one of the plurality of objects 2 as the positional relationship adjustment target on the basis of the positional relationship between the lean vehicle 1 and each of the plurality of objects 2 (for example, all detected objects 2) and the control flow shown in Fig. 6 ends.

For example, the execution section 23 sets the object 2 located closest to the lean vehicle 1 among the plurality of objects 2 as the positional relationship adjustment target. Here, the execution section 23 may set the object 2 located closest to the lean vehicle 1 in the front to rear direction among the plurality of objects 2 as the positional relationship adjustment target. Alternatively, the execution section 23 may set the object 2 located closest to the lean vehicle 1 in the lane width direction among the plurality of objects 2 as the positional relationship adjustment target. Which object 2 among the plurality of objects 2 is set as the positional relationship adjustment target may be changed depending on the type of rider support operation to which the positional relationship adjustment target is applied.

For example, when the front vehicle located in front of the lean vehicle 1 is set as the positional relationship adjustment target when executing a positional relationship adjustment operation (for example, adaptive cruise control) that brings the positional relationship between the positional relationship adjustment target and the lean vehicle 1 closer to the target positional relationship as the rider support operation by controlling the speed of the lean vehicle 1, it is preferable that the execution section 23 sets the object 2 located closest to the lean vehicle 1 in the front to rear direction among the plurality of objects 2 as the positional relationship adjustment target.

Further, when the front vehicle located in front of the lean vehicle 1 is set as the positional relationship adjustment target when executing a braking operation that automatically controls a braking force acting on the lean vehicle 1 in response to the possibility of collision of the lean vehicle 1 with respect to the positional relationship adjustment target as the rider support operation, it is preferable that the execution section 23 sets the object 2 located closest to the lean vehicle 1 in the front to rear direction among the plurality of objects 2 as the positional relationship adjustment target.

Furthermore, the execution section 23 may determine whether the object 2 travels in the same lane as the lean vehicle 1 on the basis of the surrounding environment information acquired by the surrounding environment sensor 15. Particularly, when the lean vehicle 1 travels in the lane L2 when executing the positional relationship adjustment operation as the rider support operation, it is preferable that the object 2 located closest to the lean vehicle 1 in the front to rear direction among the plurality of objects 2 traveling in the lane L2 is set as the positional relationship adjustment target.

Furthermore, there is a case in which the rear vehicle located behind the lean vehicle 1 is set as the positional relationship adjustment target when the positional relationship adjustment operation or the braking operation is executed as the rider support operation. Even in this case, it is preferable that the execution section 23 sets the object 2 located closest to the lean vehicle 1 in the front to rear direction among the plurality of objects 2 as the positional relationship adjustment target.

Here, a group consisting of a plurality of lean vehicles including the lean vehicle 1 may form a plurality of vehicle convoys and perform group traveling. In the group traveling, a plurality of lean vehicles travel in two convoys, one on the left and one on the right, in the same lane. For example, in the group traveling, a plurality of lean vehicles travel in an arrangement in which the lean vehicles forming the left vehicle row and the lean vehicles forming the right vehicle row are alternately lined up in the front to rear direction (that is, a zigzag arrangement).

Then, as the rider support operation in the group traveling, the positional relationship adjustment operation may be performed to perform the group traveling while maintaining a plurality of vehicle convoys. In the positional relationship adjustment operation of the group traveling, at least one of the plurality of lean vehicles forming a group is set as the positional relationship adjustment target.

When the positional relationship adjustment operation in the group traveling is executed as the rider support operation, the execution section 23 selects the positional relationship adjustment target on the basis of the distance between the lean vehicle 1 and the plurality of objects 2, that is, between the plurality of lean vehicles constituting a group in the lane width direction and/or in the front to rear direction. For example, when the positional relationship adjustment operation in the group traveling is executed, the execution section 23 may set the object 2 located closest to the lean vehicle 1 in the traveling direction of the lean vehicle 1 among the plurality of objects 2 as the positional relationship adjustment target. Further, for example, when the positional relationship adjustment operation in the group traveling is executed, the execution section 23 may set the object 2 located closest to the lean vehicle 1 in the lane width direction among the plurality of objects 2 as the positional relationship adjustment target.

Further, for example, when a notification operation such as a forward collision warning in which the front vehicle located in front of the lean vehicle 1 is set as the positional relationship adjustment target is executed as the rider support operation, it is preferable that the execution section 23 sets the object 2 located closest to the lean vehicle 1 in the front to rear direction among the plurality of objects 2 as the positional relationship adjustment target.

Furthermore, when a notification operation of supporting the adjustment of the positional relationship between the positional relationship adjustment target and the lean vehicle 1 by notifying the rider of the lean vehicle 1 is executed as the rider support operation, there is a case in which the rear vehicle located behind the lean vehicle 1 is set as the positional relationship adjustment target. Even in this case, it is preferable that the execution section 23 sets the object 2 located closest to the lean vehicle 1 in the front to rear direction among the plurality of objects 2 as the positional relationship adjustment target.

Further, when the lean vehicle 1 travels through a gap (so-called lane splitting), as the notification operation, there is a case in which a notification operation of setting the vehicle located on the side of the lean vehicle 1 as the positional relationship adjustment target is executed. When such a notification operation is executed as the rider support operation, the execution section 23 may set the object 2 located closest to the lean vehicle 1 in the lane width direction among the plurality of objects 2 as the positional relationship adjustment target.

Further, there is a case in which a notification operation (so-called blind spot warning) in which a blind spot vehicle located at the left rear or right rear of the lean vehicle 1 is set as the positional relationship adjustment target is executed as the notification operation. When such a notification operation is executed as the rider support operation, the execution section 23 may set the object 2 located closest to the lean vehicle 1 in the lane width direction among the plurality of objects 2 as the positional relationship adjustment target.

In the above, an example has been described in which one object 2 among the plurality of objects 2 is selected and set as the positional relationship adjustment target in step S107. However, in step S107, the execution section 23 may set the plurality of objects 2 as the positional relationship adjustment targets. For example, the execution section 23 may set both the object 2 located closest to the lean vehicle 1 in the front to rear direction among the plurality of objects 2 and the object 2 located closest to the lean vehicle 1 in the lane width direction among the plurality of objects 2 as the positional relationship adjustment targets.

Furthermore, the execution section 23 may set a virtual target located at a position in which the relative position of each object 2 with respect to the lean vehicle 1 is standardized (for example, averaged) (for example, in the example of Fig. 8, a virtual target located among the object 2f, the object 2g, and the object 2h) as the positional relationship adjustment target on the basis of the positional relationship between the lean vehicle 1 and each of the plurality of objects 2.

When it is determined that the gap G not allowing the traveling therethrough does not exist in the second determination (step S106/NO), in step S108, the execution section 23 does not select the positional relationship adjustment target and the control flow shown in Fig. 6 ends. For example, when any of the objects 2 is not set as the positional relationship adjustment target, in step S108, a state in which no positional relationship adjustment target is set is continued. Further, for example, when any of the objects 2 is set as the positional relationship adjustment target, in step S108, the setting of the positional relationship adjustment target is not changed.

In the above, a first example of the flow of the process executed by the control device 20 has been described with reference to Fig. 6. However, a process executed by the control device 20 may be a process obtained by appropriately changing the process described with reference to Fig. 6.

For example, in the above, an example of determining whether at least one gap G not allowing the traveling therethrough exists in the second determination of step S106 has been described. However, it may be determined whether the gap G allowing the traveling therethrough does not exist in the second determination of step S106. For example, when the gap information is information indicating that the gap G allowing the traveling therethrough does not exist, the execution section 23 determines that the gap G allowing the traveling therethrough does not exist. In this case, when it is determined that the gap G allowing the traveling therethrough does not exist in the second determination, the process proceeds to step S107, and when it is determined that at least one gap G allowing the traveling therethrough exists in the second determination, the process proceeds to step S108.

Further, for example, in the above, in step S108, an example of not selecting the positional relationship adjustment target has been described. However, in step S108, the execution section 23 may select the positional relationship adjustment target. For example, in step S108, the execution section 23 may set the object 2 located closest to the lean vehicle 1 as the positional relationship adjustment target.

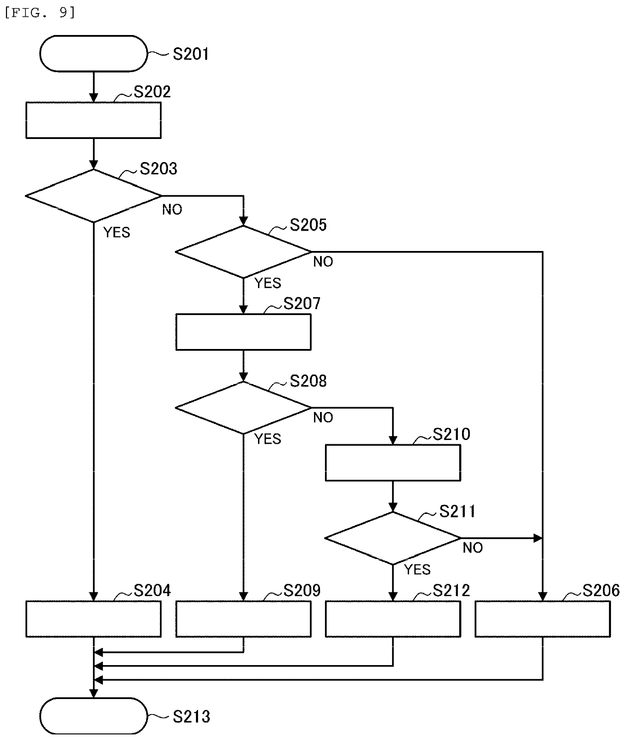

Fig. 9 is a flowchart showing a second example of a flow of a process executed by the control device 20. Step S201 of Fig. 9 corresponds to the start of the control flow shown in Fig. 9. Step S213 of Fig. 9 corresponds to the end of the control flow shown in Fig. 9. For example, the control flow shown in Fig. 9 is repeatedly executed at preset time intervals.

When the control flow shown in Fig. 9 starts, in step S202, the execution section 23 executes the first determination for the object 2 located closest to the lean vehicle 1 among all detected objects 2. Here, the object 2 located closest to the lean vehicle 1 may be the object 2 having the shortest straight line distance to the lean vehicle 1 or the object 2 located closest to the lean vehicle 1 in the front to rear direction.

After step S202, in step S203, the execution section 23 determines whether the position of the object 2 located closest to the lean vehicle 1 is included in the reference region R in the first determination.

When it is determined that the position of the object 2 located closest to the lean vehicle 1 is included in the reference region R in the first determination (step S203/YES), the process proceeds to step S204. On the other hand, when it is determined that the position of the object 2 located closest to the lean vehicle 1 is not included in the reference region R in the first determination (step S203/NO), the process proceeds to step S205.

When it is determined that the position of the object 2 located closest to the lean vehicle 1 is included in the reference region R in the first determination (step S203/YES), in step S204, the execution section 23 sets the object 2 located closest to the lean vehicle 1 as the positional relationship adjustment target and the control flow shown in Fig. 9 ends.

When it is determined that the position of the object 2 located closest to the lean vehicle 1 is not included in the reference region R in the first determination (step S203/NO), in step S205, the execution section 23 determines whether other objects 2 exist around the object 2 located closest to the lean vehicle 1. For example, when other objects 2 exist in a range within a predetermined distance from the object 2 located closest to the lean vehicle 1, the execution section 23 determines that other objects 2 exist around the object 2 located closest to the lean vehicle 1.

When it is determined that other objects 2 do not exist around the object 2 located closest to the lean vehicle 1 (step S205/NO), the process proceeds to step S206. On the other hand, when it is determined that other objects 2 exist around the object 2 located closest to the lean vehicle 1 (step S205/YES), the process proceeds to step S207.

When it is determined that other objects 2 do not exist around the object 2 located closest to the lean vehicle 1 (step S205/NO), in step S206, the execution section 23 does not select the positional relationship adjustment target and the control flow shown in Fig. 9 ends. The process of step S206 is similar to the process of step S108 of Fig. 6.

When it is determined that other objects 2 exist around the object 2 located closest to the lean vehicle 1 (step S205/YES), in step S207, the execution section 23 executes the second determination. Specifically, the execution section 23 executes the second determination of determining whether the lean vehicle 1 is allowed to travel through the gap G for all gaps G formed by the object 2 located closest to the lean vehicle 1 and other objects 2 existing around the object 2.

After step S207, in step S208, the execution section 23 determines whether at least one gap G not allowing the traveling therethrough exists in the second determination. As described above, for example, when the gap information is information indicating that at least one gap G not allowing the traveling therethrough exists, the execution section 23 determines that at least one gap G not allowing the traveling therethrough exists.

When it is determined that at least one gap G not allowing the traveling therethrough exists in the second determination (step S208/YES), the process proceeds to step S209. On the other hand, when it is determined that the gap G not allowing the traveling therethrough does not exist in the second determination (step S208/NO), the process proceeds to step S210.

When it is determined that at least one gap G not allowing the traveling therethrough exists in the second determination (step S208/YES), in step S209, the execution section 23 sets the positional relationship adjustment target on the basis of the positional relationship between the lean vehicle 1 and each of the plurality of objects 2 (for example, the object 2 located closest to the lean vehicle 1 and other objects 2 existing around the object 2) and the control flow shown in Fig. 9 ends. The process of step S209 is similar to the process of step S107 of Fig. 6.

When it is determined that the gap G not allowing the traveling therethrough does not exist in the second determination (step S208/NO), in step S210, the execution section 23 executes a third determination of determining whether the position of the object 2 is included in the reference region R for the object 2 not subjected to the first determination.

After step S210, in step S211, the execution section 23 determines whether at least one object 2 whose position is included in the reference region R exists in the third determination.

When it is determined that at least one object 2 whose position is included in the reference region R exists in the third determination (step S211/YES), the process proceeds to step S212. On the other hand, when it is determined that the object 2 whose position is included in the reference region R does not exist in the third determination (step S211/NO), the process proceeds to step S206.

When it is determined that at least one object 2 whose position is included in the reference region R exists in the third determination (step S211/YES), in step S212, the execution section 23 sets the positional relationship adjustment target on the basis of the determination result of the third determination and the control flow shown in Fig. 9 ends. The process of step S212 is similar to the process of step S104 of Fig. 6.

When it is determined that the object 2 whose position is included in the reference region R does not exist in the third determination (step S211/NO), in step S206, the execution section 23 does not select the positional relationship adjustment target and the control flow shown in Fig. 9 ends.

In the above, a second example of the flow of the process executed by the control device 20 has been described with reference to Fig. 9. However, a process executed by the control device 20 may be a process obtained by appropriately changing the process described with reference to Fig. 9.

For example, in the above, an example of determining whether at least one gap G not allowing the traveling therethrough exists in the second determination of step S208 has been described. However, it may be determined whether the gap G allowing the traveling therethrough does not exist in the second determination of step S208. As described above, for example, when the gap information is information indicating that the gap G not allowing the traveling therethrough does not exist, the execution section 23 determines that the gap G not allowing the traveling therethrough does not exist. In this case, when it is determined that the gap G allowing the traveling therethrough does not exist in the second determination, the process proceeds to step S209, and when at least one gap G allowing the traveling therethrough exists in the second determination, the process proceeds to step S210.

Further, for example, in the above, an example not selecting the positional relationship adjustment target in step S206 has been described. However, in step S206, the execution section 23 may select the positional relationship adjustment target. For example, in step S206, the execution section 23 may set the object 2 located closest to the lean vehicle 1 as the positional relationship adjustment target.

In the above, a first example and a second example have been described as a process example executed by the control device 20. The control device 20 executes, for example, a process of the first example or the second example. In the second example, since the object 2 close to the lean vehicle 1 is more likely to be preferentially set as the positional relationship adjustment target, it is easy to more accurately set the positional relationship adjustment target compared to the first example. However, the process executed by the control device 20 is not limited to the first example and the second example. Since the control device 20 only needs to execute at least the first determination, for example, the positional relationship adjustment target may be set without executing the second determination.

According to the viewpoint of accurately setting the positional relationship adjustment target, the acquisition section 21 may set not only the occupied road width information for setting the reference region R used in the first determination but also the occupied road width information used in the second determination and/or the occupied road width information for setting the reference region R used in the third determination on the basis of the traveling state information.

### <Effect of control device>

The effect of the control device 20 according to the embodiment of the invention will be described.

According to the invention, the control device 20 of the lean vehicle 1 includes the acquisition section 21 which acquires the travel locus information corresponding to information of the travel locus of the lean vehicle 1 and the occupied road width information corresponding to information of the road width W occupied by the traveling of the lean vehicle 1, the setting section 22 which sets the reference region R on the basis of the travel locus information and the occupied road width information, and the execution section 23 which executes the rider support operation for supporting the adjustment of the positional relationship between the lean vehicle 1 and the positional relationship adjustment target, wherein the execution section 23 executes the first determination of determining whether the position of at least one object 2 is included in the reference region R and sets the positional relationship adjustment target on the basis of the determination result of the first determination, and wherein the acquisition section 21 sets the occupied road width information for setting the reference region R used in the first determination on the basis of the traveling state information of the lean vehicle 1. Accordingly, it is possible to set the positional relationship adjustment target by taking into account changes in the road width W occupied by the traveling of the lean vehicle 1 depending on the traveling state. Therefore, it is possible to appropriately support the rider's driving of the lean vehicle 1.

Preferably, in the control device 20, when it is determined that the position of the object 2 is included in the reference region R in the first determination, the execution section 23 sets the object 2 as the positional relationship adjustment target. Accordingly, it is possible to appropriately set the positional relationship adjustment target by taking into account the positional relationship between the object 2 and the reference region R corresponding to a region through which the road width W occupied by the traveling of the lean vehicle 1 will pass in the future.

Preferably, in the control device 20, when it is determined that the positions of the plurality of objects 2 are included in the reference region R in the first determination, the execution section 23 sets one of the plurality of objects 2 as the positional relationship adjustment target on the basis of the positional relationship between the lean vehicle 1 and each of the plurality of objects 2. Accordingly, when the positions of the plurality of objects 2 are included in the reference region R, it is possible to appropriately set the positional relationship adjustment target by taking into account the positional relationship between the plurality of objects 2 and the reference region R which is a region having the road width W occupied by the traveling of the lean vehicle 1 as a horizontal width and extending along the travel locus of the lean vehicle 1.

Preferably, in the control device 20, when it is determined that the positions of the plurality of objects 2 are included in the reference region R in the first determination, the execution section 23 sets the object 2 located closest to the lean vehicle 1 among the plurality of objects 2 as the positional relationship adjustment target. Accordingly, when the positions of the plurality of objects 2 are included in the reference region R, it is possible to more appropriately set the positional relationship adjustment target by taking into account the positional relationship between the plurality of objects 2 and the reference region R which is a region having the road width W occupied by the traveling of the lean vehicle 1 as a horizontal width and extending along the travel locus of the lean vehicle 1.

Preferably, in the control device 20, the acquisition section 21 acquires the gap information corresponding to information of the gap G between the objects 2 on the basis of the surrounding environment information of the lean vehicle 1, and when it is not determined that the position of the object 2 is included in the reference region R in the first determination, the execution section 23 executes the second determination of determining whether the lean vehicle 1 is allowed to travel through the gap G on the basis of the occupied road width information and the gap information and sets the positional relationship adjustment target on the basis of the determination result of the second determination together with the determination result of the first determination. Accordingly, it is possible to more appropriately set the positional relationship adjustment target by taking into account the possibility of the traveling of the lean vehicle 1 through the gap G together with the positional relationship between the object 2 and the reference region R which is a region having the road width W occupied by the traveling of the lean vehicle 1 as a horizontal width and extending along the travel locus of the lean vehicle 1.

Preferably, in the control device 20, the acquisition section 21 acquires not only the occupied road width information for setting the reference region R used in the first determination but also the occupied road width information used in the second determination on the basis of the traveling state information. Accordingly, it is possible to execute the second determination by taking into account changes in the road width W occupied by the traveling of the lean vehicle 1 depending on the traveling state. Therefore, it is possible to improve the determination accuracy of the second determination.

Preferably, in the control device 20, when it is determined that the gap information is information indicating that at least one gap G not allowing the traveling therethrough exists in the second determination, the execution section 23 sets the positional relationship adjustment target on the basis of the positional relationship between the lean vehicle 1 and each of the plurality of objects 2. Accordingly, when the possibility of the traveling of the lean vehicle 1 through the gap G is low, it is possible to appropriately support the rider's driving of the lean vehicle 1 by appropriately setting the positional relationship adjustment target.

Preferably, in the control device 20, when it is determined that the gap information is information indicating that at least one gap G not allowing the traveling therethrough exists in the second determination, the execution section 23 sets the object 2 located closest to the lean vehicle 1 in the front to rear direction among the plurality of objects 2 as the positional relationship adjustment target. Accordingly, when the possibility of the traveling of the lean vehicle 1 through the gap G is low, it is possible to appropriately support the rider's driving of the lean vehicle 1 by appropriately setting the positional relationship adjustment target.

Preferably, in the control device 20, when it is determined that the gap information is information indicating that at least one gap G not allowing the traveling therethrough exists in the second determination, the execution section 23 sets the object 2 located closest to the lean vehicle 1 in the lane width direction among the plurality of objects 2 as the positional relationship adjustment target. Accordingly, when the possibility of the traveling of the lean vehicle 1 through the gap G is low, it is possible to appropriately support the rider's driving of the lean vehicle 1 by appropriately setting the positional relationship adjustment target.

Preferably, in the control device 20, if the object 2 not subjected to the first determination exists when it is determined that the gap information is information indicating that at least one gap G allowing the traveling therethrough exists in the second determination, the execution section 23 executes the third determination of determining whether the position of the object 2 is included in the reference region R and sets the positional relationship adjustment target on the basis of the determination result of the third determination. Accordingly, when the possibility of the traveling of the lean vehicle 1 through the gap G is high and the object 2 not subjected to the first determination exists, it is possible to more appropriately set the positional relationship adjustment target by taking into account the positional relationship between the object 2 and the reference region R which is a region having the road width W occupied by the traveling of the lean vehicle 1 as a horizontal width and extending along the travel locus of the lean vehicle 1.

Preferably, in the control device 20, the acquisition section 21 sets not only the occupied road width information for setting the reference region R used in the first determination but also the occupied road width information used for the second determination and/or the occupied road width information for setting the reference region R used in the third determination on the basis of the traveling state information. Accordingly, it is possible to execute the second determination and/or the third determination by taking into account changes in the road width W occupied by the traveling of the lean vehicle 1 depending on the traveling state. Therefore, it is possible to improve the determination accuracy of the second determination and/or the third determination.

Preferably, in the control device 20, the acquisition section 21 acquires the occupied road width information on the basis of the dimensional information of the side projecting part of the lean vehicle 1. Accordingly, it is possible to accurately acquire the occupied road width information by taking into account the dimensional information of the side projecting part of the lean vehicle 1.

Preferably, in the control device 20, the acquisition section 21 acquires the occupied road width information on the basis of the passenger information of the lean vehicle 1. Accordingly, it is possible to accurately acquire the occupied road width information by taking into account the passenger information of the lean vehicle 1.

Preferably, in the control device 20, the acquisition section 21 acquires the occupied road width information on the basis of the load information of the lean vehicle 1. Accordingly, it is possible to accurately acquire the occupied road width information by taking into account the load information of the lean vehicle 1.

The invention is not limited to the description of the embodiments. For example, only a part of the embodiments may be implemented.

### Reference Signs List

1: Lean vehicle
2: Object
2a: Object
2b: Object
2c: Object
2d: Object
2e: Object
2f: Object
2g: Object
2h: Object
3: Region
11: Engine
12: Hydraulic pressure control unit
13: Display device
14: Input device
15: Surrounding environment sensor
16: Front wheel speed sensor
17: Rear wheel speed sensor
18: Inertial measurement unit
20: control device
21: Acquisition section
22: Setting section
23: Execution section
G: Gap
L1: Lane
L2: Lane
LB: Lane boundary
R: Reference region
W: Road width
θ: Lean angle

## Claims

1. A control device (20) for a lean vehicle (1) comprising:
an acquisition section (21) which acquires travel locus information corresponding to information of a travel locus of the lean vehicle (1) and occupied road width information corresponding to information of a road width (W) occupied by traveling of the lean vehicle (1);
a setting section (22) which sets a reference region (R) on the basis of the travel locus information and the occupied road width information; and
an execution section (23) which executes a rider support operation for supporting adjustment of a positional relationship between the lean vehicle (1) and a positional relationship adjustment target,
wherein the execution section (23) executes a first determination of determining whether a position of at least one object (2) is included in the reference region (R), and sets the positional relationship adjustment target on the basis of determination result of the first determination, and
wherein the acquisition section (21) sets the occupied road width information for setting the reference region (R) used in the first determination on the basis of traveling state information of the lean vehicle (1).

2. The control device according to claim 1,
wherein when it is determined that the position of the object (2) is included in the reference region (R) in the first determination, the execution section (23) sets the object (2) as the positional relationship adjustment target.

3. The control device according to claim 1,
wherein when it is determined that the positions of a plurality of the objects (2) are included in the reference region (R) in the first determination, the execution section (23) sets one of the plurality of the objects (2) as the positional relationship adjustment target on the basis of a positional relationship between the lean vehicle (1) and each of the plurality of the objects (2).

4. The control device according to claim 3,
wherein when it is determined that the positions of the plurality of the objects (2) are included in the reference region (R) in the first determination, the execution section (23) sets the object (2) located closest to the lean vehicle (1) among the plurality of the objects (2) as the positional relationship adjustment target.

5. The control device according to claim 1,
wherein the acquisition section (21) acquires gap information corresponding to information of a gap (G) between the objects (2) on the basis of surrounding environment information of the lean vehicle (1), and
wherein the execution section (23) executes a second determination of determining whether the lean vehicle (1) is allowed to travel through the gap (G) on the basis of the occupied road width information and the gap information when it is not determined that the position of the object (2) is included in the reference region (R) in the first determination, and sets the positional relationship adjustment target on the basis of determination result of the second determination together with the determination result of the first determination.

6. The control device according to claim 5,
wherein the acquisition section (21) sets not only the occupied road width information for setting the reference region (R) used in the first determination but also the occupied road width information used in the second determination on the basis of the traveling state information.

7. The control device according to claim 5,
wherein when the gap information is information indicating that at least one gap (G) not allowing traveling therethrough exists in the second determination, the execution section (23) sets the positional relationship adjustment target on the basis of a positional relationship between the lean vehicle (1) and each of a plurality of the objects (2).

8. The control device according to claim 7,
wherein when the gap information is information indicating that at least one gap (G) not allowing the traveling therethrough exists in the second determination, the execution section (23) sets the object (2) located closest to the lean vehicle (1) in the front to rear direction among the plurality of the objects (2) as the positional relationship adjustment target.

9. The control device according to claim 7,
wherein when the gap information is information indicating that at least one gap (G) not allowing the traveling therethrough exists in the second determination, the execution section (23) sets the object (2) located closest to the lean vehicle (1) in the lane width direction among the plurality of the objects (2) as the positional relationship adjustment target.

10. The control device according to claim 5,
wherein when the object (2) not subjected to the first determination exists when the gap information is information indicating that at least one gap (G) allowing traveling therethrough exists in the second determination, the execution section (23) executes a third determination of determining whether the position of the object (2) is included in the reference region (R), and sets the positional relationship adjustment target on the basis of determination result of the third determination.

11. The control device according to claim 10,
wherein the acquisition section (21) sets not only the occupied road width information for setting the reference region (R) used in the first determination but also the occupied road width information used in the second determination and/or the occupied road width information for setting the reference region (R) used in the third determination on the basis of the traveling state information.

12. The control device according to any one of claims 1 to 11,
wherein the acquisition section (21) acquires the occupied road width information on the basis of dimensional information of a side projecting part of the lean vehicle (1).

13. The control device according to any one of claims 1 to 11,
wherein the acquisition section (21) acquires the occupied road width information on the basis of passenger information of the lean vehicle (1).

14. The control device according to any one of claims 1 to 11,
wherein the acquisition section (21) acquires the occupied road width information on the basis of load information of the lean vehicle (1).

15. A control method for a lean vehicle (1) comprising:
allowing an acquisition section (21) of a control device (20) to acquire travel locus information corresponding to information of a travel locus of the lean vehicle (1) and occupied road width information corresponding to information of a road width (W) occupied by traveling of the lean vehicle (1);
allowing a setting section (22) of the control device (20) to set a reference region (R) on the basis of the travel locus information and the occupied road width information; and
allowing an execution section (23) of the control device (20) to execute a rider support operation for supporting adjustment of a positional relationship between the lean vehicle (1) and a positional relationship adjustment target,
wherein the execution section (23) executes a first determination of determining whether a position of at least one object (2) is included in the reference region (R), and sets the positional relationship adjustment target on the basis of determination result of the first determination, and
wherein the acquisition section (21) sets the occupied road width information for setting the reference region (R) used in the first determination on the basis of traveling state information of the lean vehicle (1).
